(19) **Europäisches Patentamt / European Patent Office / Office européen des brevets**

(11) **EP 4 787 816 A1**

(12) # EUROPEAN PATENT APPLICATION
published in accordance with Art. 153(4) EPC

(43) Date of publication:
**05.08.2026 Bulletin 2026/32**

(21) Application number: **24872275.3**

(22) Date of filing: **25.09.2024**

(51) International Patent Classification (IPC):
**H04L 67/10** *(2022.01)*   **F24F 11/54** *(2018.01)*
**H04L 12/28** *(2006.01)*   **H04L 67/50** *(2022.01)*

(52) Cooperative Patent Classification (CPC):
**F24F 11/54; H04L 12/28; H04L 67/10;**
**H04L 67/125; H04L 67/50**

(86) International application number:
**PCT/JP2024/034166**

(87) International publication number:
**WO 2025/070489 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.09.2023 JP 2023161701**

(71) Applicant: **General Inc.**
**Kawasaki-shi, Kanagawa 213-8502 (JP)**

(72) Inventors:
• **KITAMI, Koichi**
  **Kawasaki-shi, Kanagawa 213-8502 (JP)**
• **NAGAYAMA, Toshitsugu**
  **Kawasaki-shi, Kanagawa 213-8502 (JP)**
• **ASANO, Shinya**
  **Kawasaki-shi, Kanagawa 213-8502 (JP)**
• **IMINA, Kentaro**
  **Kawasaki-shi, Kanagawa 213-8502 (JP)**

(74) Representative: **TBK**
**Bavariaring 4-6**
**80336 München (DE)**

(54) **AIR CONDITIONER MANAGEMENT SYSTEM AND MANAGEMENT DEVICE**

(57)     In an air conditioner management system (1), a management apparatus (10) stores software in a software frame that has a frame length equal to or smaller than a frame length of a control command frame, which is transmitted from the management apparatus (10) to any of a wall-mounted air conditioner (20-1), a ceiling-embedded air conditioner (20-2), and a duct air conditioner (20-3) and which has a fixed length, and transmits the software frame storing the software to the wall-mounted air conditioner (20-1), the ceiling-embedded air conditioner (20-2), and the duct air conditioner (20-3) by using multicast, and an air conditioner that has completed reception of the software among the wall-mounted air conditioner (20-1), the ceiling-embedded air conditioner (20-2), and the duct air conditioner (20-3) operates by using the received software.

FIG.1

**Description**

Technical Field

The present disclosure is related to an air conditioner management system and a management apparatus.

Background Art

A management system that transfers a new version of software from a management center to a plurality of clients via a network, and the clients that have received the software operate by using the new version of software is known.

Citation List

Patent Literature

Patent Literature 1: Japanese Laid-open Patent Publication No. 2004-126960
Patent Literature 2: Japanese Laid-open Patent Publication No. 2005-321515

Summary of invention

Technical Problem

In a system (hereinafter, may be referred to as an "air conditioner management system") in which a plurality of air conditioners and a management apparatus are connected to one another via a network, it is expected that the management apparatus distributes a new version of software to the plurality of air conditioners. A transmission bandwidth of a network used by the air conditioner management system is generally narrow, and is about 5 kbps to 1.25 Mbps, for example. Therefore, if the number of the air conditioners connected to the management apparatus increases, it takes a long time to update software, which is a problem.

To cope with this, the present disclosure proposes a technology for completing software update in a short time even in a narrowband network.

Solution to Problem

An air conditioner management system includes a plurality of air conditioners and a management apparatus that is connected to the plurality of air conditioners via a network. The management apparatus transmits a software frame that has a frame length longer than a frame length of a control command frame, the control command frame being transmitted from the management apparatus to any of the air conditioners and having a fixed length, and equal to or shorter than three times the frame length of the control command frame to the plurality of air conditioners by using multicast. The air conditioner that has completed reception of the software among the plurality of air conditioners operates by using the received software.

Advantageous Effects of Invention

According to the present disclosure, it is possible to complete software update in a short time even in a narrowband network.

Brief Description of Drawings

FIG. 1 is a diagram illustrating a configuration example of an air conditioner management system according to the present disclosure.
FIG. 2 is a diagram illustrating a configuration example of a management apparatus according to the present disclosure.
FIG. 3 is a diagram illustrating a configuration example of an air conditioner according to the present disclosure.
FIG. 4 is a diagram illustrating a configuration example of a software frame according to the present disclosure.

FIG. 5 is a diagram illustrating comparison between the software frame and a control command frame according to the present disclosure.

FIG. 6 is a diagram illustrating an operation example of the air conditioner management system according to the present disclosure.

Embodiments for Carrying Out the Invention

Embodiments of the present disclosure will be described below based on the drawings. In the embodiments below, the same components are denoted by the same reference symbols.

Embodiment

<Configuration of air conditioner management system>

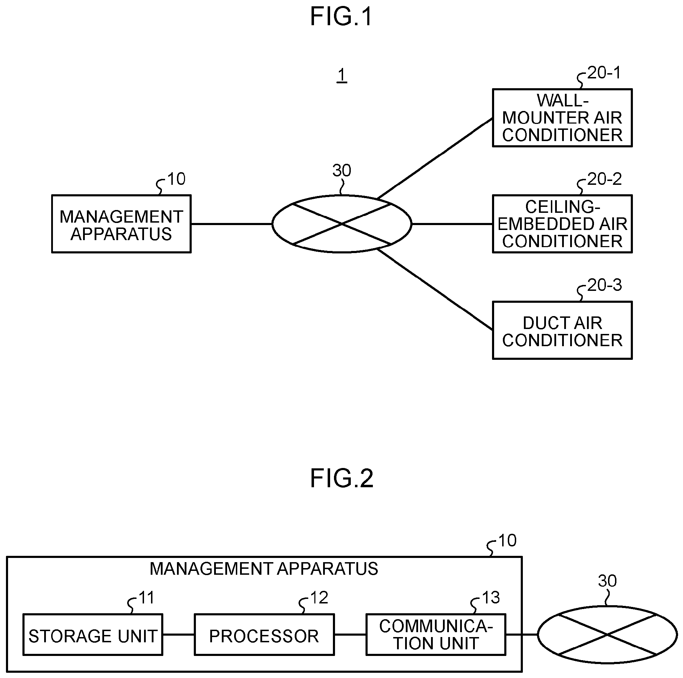

FIG. 1 is a diagram illustrating a configuration example of an air conditioner management system according to the present disclosure. In FIG. 1, an air conditioner management system 1 includes a management apparatus 10, a wall-mounted air conditioner 20-1, a ceiling-embedded air conditioner 20-2, and a duct air conditioner 20-3, and the management apparatus 10 is connected to each of the wall-mounted air conditioner 20-1, the ceiling-embedded air conditioner 20-2, and the duct air conditioner 20-3 via a network 30.

Examples of the management apparatus 10 include a server as a computer.

The wall-mounted air conditioner 20-1 is an air conditioner of a type in which an indoor unit is mounted on a wall of a room. The ceiling-embedded air conditioner 20-2 is an air conditioner of a type in which an indoor unit is mounted on a ceiling of a room. The duct air conditioner 20-3 is an air conditioner of a type in which air from an indoor unit is supplied to each room via a duct. In this manner, the wall-mounted air conditioner 20-1, the ceiling-embedded air conditioner 20-2, and the duct air conditioner 20-3 are air conditioners including the indoor units that are installed in different forms. In the following, the wall-mounted air conditioner 20-1, the ceiling-embedded air conditioner 20-2, and the duct air conditioner 20-3 may be collectively referred to as an "air conditioner 20".

A transmission bandwidth of the network 30 is, for example, equal to or larger than 5 kbps and equal to or smaller than 1.25 Mbps, and examples of the network 30 include LONWORKS (registered trademark) that is used for a building management system or the like.

<Configuration of management apparatus>

FIG. 2 is a diagram illustrating a configuration example of the management apparatus according to the present disclosure. In FIG. 2, the management apparatus 10 includes a storage unit 11, a processor 12, and a communication unit 13. The communication unit 13 is connected to the network 30. Examples of the storage unit 11 include a storage and a memory. Examples of the processor 12 include a Central Processing Unit (CPU), and a Digital Signal Processor (DSP). Examples of the communication unit 13 include a communication module.

The storage unit 11 stores therein a control command that is transmitted from the management apparatus 10 to any of the wall-mounted air conditioner 20-1, the ceiling-embedded air conditioner 20-2, and the duct air conditioner 20-3 by using unicast. Further, the storage unit 11 stores therein software that is transmitted to all of the wall-mounted air conditioner 20-1, the ceiling-embedded air conditioner 20-2, and the duct air conditioner 20-3 by using multicast. Examples of the control command that is stored in the storage unit 11 include a control command for instructing the air conditioner 20 to perform operation setting and a control command for requesting the air conditioner 20 for operation information on the air conditioner 20. Examples of the software that is stored in the storage unit 11 include a new version of software in which a defect is corrected and a new version of software in which a new function is added.

The processor 12 reads the control command from the storage unit 11, encapsulates the read control command, and causes the communication unit 13 to transmit the encapsulated control command, as a control command frame, to any of the wall-mounted air conditioner 20-1, the ceiling-embedded air conditioner 20-2, and the duct air conditioner 20-3 by using unicast.

Furthermore, the processor 12 reads the software from the storage unit 11, stores the read software in a software frame, and causes the communication unit 13 to transmit the software frame storing the software to all of the wall-mounted air conditioner 20-1, the ceiling-embedded air conditioner 20-2, and the duct air conditioner 20-3 by using multicast.

<Configuration of air conditioner>

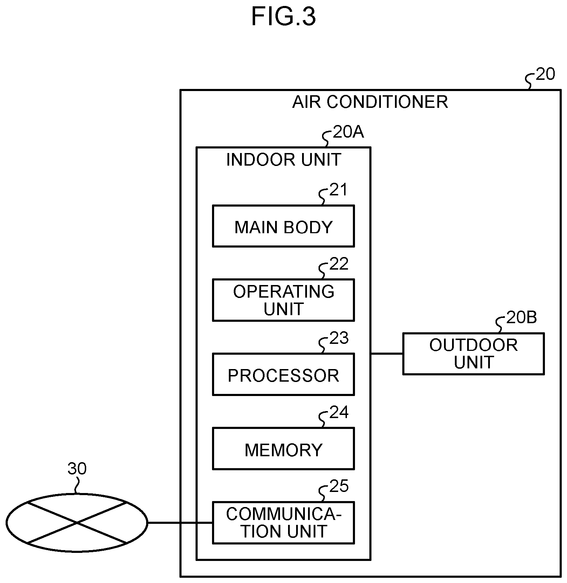

FIG. 3 is a diagram illustrating a configuration example of the air conditioner according to the present disclosure. In FIG. 3, the air conditioner 20 includes an indoor unit 20A and an outdoor unit 20B. The indoor unit 20A is installed inside a room, and performs heat exchange between air in the room and a refrigerant that is supplied from the outdoor unit 20B to heat or cool the air in the room to air-condition the room. The outdoor unit 20B is installed outside the room while being connected to the indoor unit 20A, and supplies the refrigerant to the indoor unit 20A.

The indoor unit 20A includes a main body 21, an operating unit 22, a processor 23, a memory 24, and a communication unit 25. The communication unit 25 is connected to the network 30. Examples of the processor 23 include a CPU and a DSP. Examples of the communication unit 25 include a communication module.

The main body 21 includes a heat exchanger, a fan, and the like, and blows out air that is subjected to heat exchange with the refrigerant that is supplied from the outdoor unit 20B. The operating unit 22 is an interface that allows a user of the air conditioner 20 to input various kinds of commands to the indoor unit 20A, and is, for example, a remote controller. The processor 23 controls the entire indoor unit 20A. The memory 24 stores therein various kinds of information, software for operating the processor 23, and the like.

<Software frame>

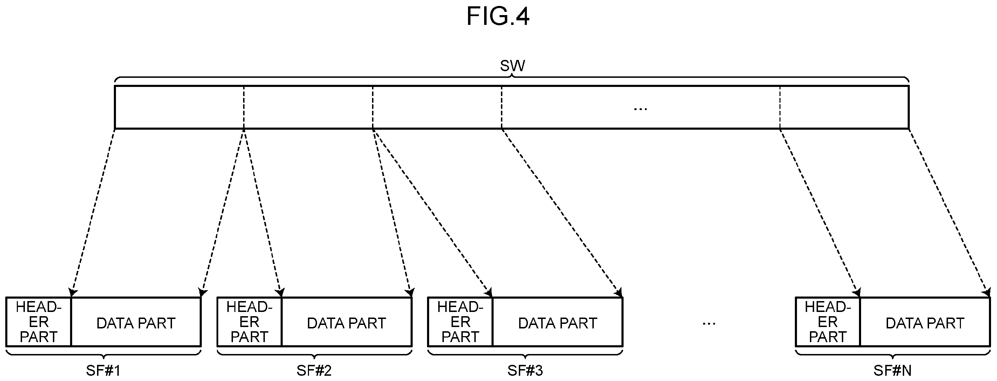

FIG. 4 is a diagram illustrating a configuration example of a software frame according to the present disclosure. As illustrated in FIG. 4, the processor 12 of the management apparatus 10 reads software SW that is stored in the storage unit 11 from the storage unit 11, divides and encapsulates the read software SW, and causes the communication unit 25 to sequentially transmit the encapsulated software as a first software frame SF#1, a second software frame SF#2, a third software frame SF#3, ..., and N-th software frame SF#N to the network 30. In the following, the first software frame SF#1, the second software frame SF#2, the third software frame SF#3, ..., and the N-th software frame SF#N may be collectively referred to as a "software frame SF".

The software frame SF includes, as illustrated in FIG. 4, a header part and a data part. The processor 12 divides and encapsulates the software SW by a length of the data part of the software frame SF, and causes the communication unit 25 to sequentially transmit pieces of the encapsulated data as the first software frame SF#1, the second software frame SF#2, the third software frame SF#3, ..., and the N-th software frame SF#N to the network 30. The management apparatus 10 transmits the software frame SF to the wall-mounted air conditioner 20-1, the ceiling-embedded air conditioner 20-2, and the duct air conditioner 20-3 by always using multicast.

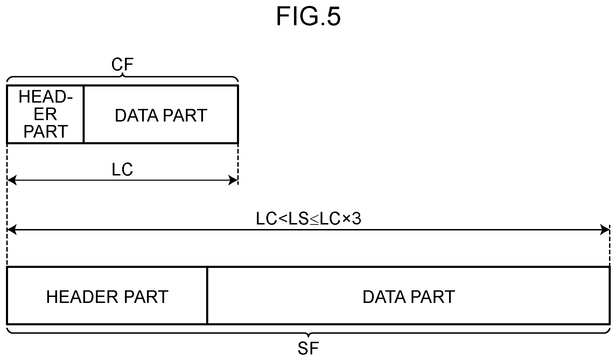

FIG. 5 is a diagram illustrating comparison between the software frame and a control command frame according to the present disclosure. As illustrated in FIG. 5, it is preferable that a frame length LS of the software frame SF is longer than a frame length LC of a control command frame CF that is a fixed length, and equal to or shorter than three times the frame length LC based on a simulation result to be described later.

<Operation of air conditioner management system>

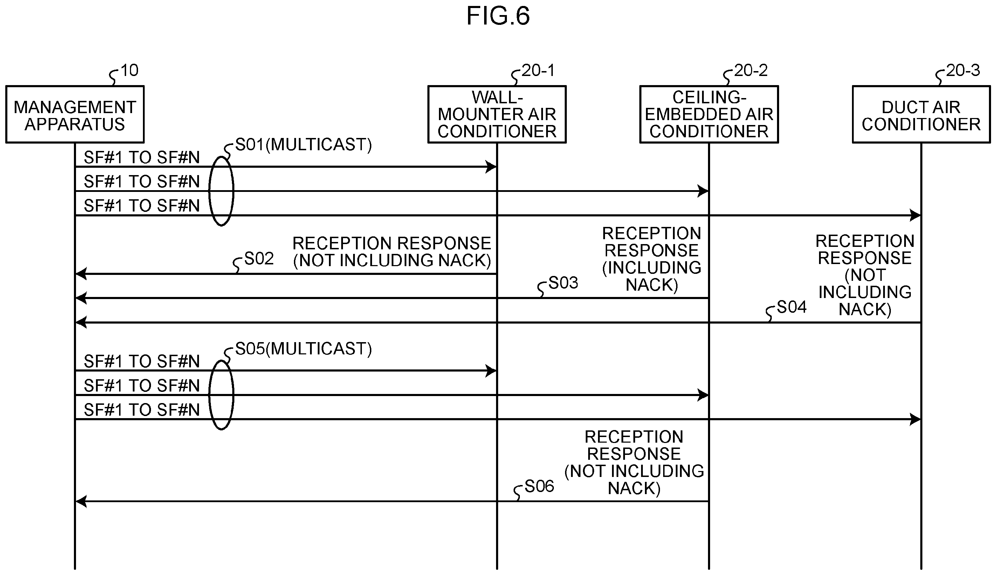

FIG. 6 is a diagram illustrating an operation example of the air conditioner management system according to the present disclosure.

In FIG. 6, at Step S01, the processor 12 of the management apparatus 10 sequentially transmits the N software frames SF, such as the first software frame SF#1 to the N-th software frame SF#N, to all of the wall-mounted air conditioner 20-1, the ceiling-embedded air conditioner 20-2, and the duct air conditioner 20-3 by using multicast for the first time.

At Step S02, the wall-mounted air conditioner 20-1 that has successfully received all of the first software frame SF#1 to the N-th software frame SF#N transmits a reception response that includes ACK (acknowledgement) for all of the first software frame SF#1 to the N-th software frame SF#N (that is, NACK (negative-acknowledgement) is not included), together with an identification ID of the wall-mounted air conditioner 20-1, to the management apparatus 10.

At Step S03, the ceiling-embedded air conditioner 20-2 that has failed to receive any of the software frames SF among the first software frame SF#1 to the N-th software frame SF#N due to the influence of random external noise or the like transmits a reception response that includes NACK for the software frame SF that has failed to be received, together with an identification ID of the ceiling-embedded air conditioner 20-2, to the management apparatus 10.

At Step S04, the duct air conditioner 20-3 that has successfully received all of the first software frame SF#1 to the N-th software frame SF#N transmits a reception response that includes ACK (acknowledgement) for all of the first software frame SF#1 to the N-th software frame SF#N (that is, NACK (negative-acknowledgement) is not included), together with an identification ID of the duct air conditioner 20-3, to the management apparatus 10.

Here, the wall-mounted air conditioner 20-1, the ceiling-embedded air conditioner 20-2, and the duct air conditioner 20-3 determine success or failure of reception of the software frame SF based on, for example, a comparison result between a checksum calculation result of the data part of the software frame SF and a checksum value included in the software frame SF.

The plurality of air conditioners 20 that are transmission targets of multicast at Step S01 include the air conditioner 20 (that is, the ceiling-embedded air conditioner 20-2) that has failed to receive at least one of the software frames SF, and therefore, at Step S05, the processor 12 sequentially re-transmits the N software frames SF, such as the first software frame SF#1 to the N-th software frame SF#N, to all of the wall-mounted air conditioner 20-1, the ceiling-embedded air conditioner 20-2, and the duct air conditioner 20-3 by using multicast, instead of using unicast for the ceiling-embedded air conditioner 20-2.

At Step S06, the ceiling-embedded air conditioner 20-2 that has successfully received the software frame SF that has failed to be received at the time of multicast transmission at Step S01 among the first software frame SF#1 to the N-th software frame SF#N that are re-transmitted at Step S05, that is, the ceiling-embedded air conditioner 20-2 that has successfully received all of the first software frame SF#1 to the N-th software frame SF#N transmits a reception response that includes ACK for the software frame SF that has been successfully received at the time of re-transmission at Step S05 (that is, NACK is not include), together with the identification ID of the ceiling-embedded air conditioner 20-2, to the management apparatus 10.

Further, the wall-mounted air conditioner 20-1, the ceiling-embedded air conditioner 20-2, and the duct air conditioner 20-3 that have successfully received all of the first software frame SF#1, the second software frame SF#2, the third software frame SF#3, ..., and the N-th software frame SF#N, that is, the air conditioner 20 that has completed reception of the software SW starts to operate by the received software SW instead of software that is currently operating.

<Simulation result>

In the following, a software frame with the same frame length as the frame length LC of the control command frame CF will be described as a "onefold frame", a software frame whose frame length is three times longer than the frame length LC will be described as a "threefold frame", and a software frame whose frame length is ten times longer than the frame length LC will be described as a "tenfold frame".

Further, in the following, a case will be described in which the software SW is divided into 26215 software frames, and the divided 26215 software frames are transmitted by using multicast. Furthermore, in the following, it is assumed that the number of the air conditioners 20 to which the software frames are transmitted by multicast is 400. Moreover, in the following, it is assumed that each of the 400 air conditioners 20 fails to receive three software frames among the 26215 software frames due to the influence of external noise or the like.

In each case, assuming that the three software frames fail to be received, a probability that all of the 400 air conditioners 20 successfully receive all of the 26215 software frames by transmitting the same onefold frame twice (that is, re-transmission is performed once) for each of the three software frames that fail to be received will be calculated as described below.

Firstly, all of combinations of the software frames that fail to be received among the 26215 software frames that are transmitted for the first time are combinations of three software frames that are arbitrarily selected from among the 26215 software frames, and are represented by "$_{26215}C_3$ (combinations)".

Subsequently, combinations of software frames that fail to be received at the second transmission and that are different from the software frames that have failed to be received at the first transmission are combinations in which 26212 that is obtained by subtracting the three software frames that have filed to be received at the first transmission from the 26215 software frames is adopted as a parameter, and therefore represented by "$_{26212}C_3$ (combinations)".

Therefore, the probability (%) that the single air conditioner 20 successfully receives all of the 26215 software frames by transmitting the same onefold frame twice (that is, re-transmission is performed once) is represented by Expression (1) below, in which the number of combinations at the first transmission is divided by the number of combinations at the second transmission.

$$(_{26212}C_3 \ / \ _{26215}C_3) \ \times \ 100 \tag{1}$$

Further, the probability that all of the 400 air conditioners 20 successfully receive all of the 26215 software frames by transmitting the same onefold frame twice (that is, re-transmission is performed once) is represented by Expression (2) below, in which the probability that the single air conditioner 20 successfully receives all of the 26215 software frames by transmitting the same onefold frame twice is multiplied by 400.

$$((_{26212}C_3 \ / \ _{26215}C_3) \ \times \ 100)^{400} \ \approx \ 87.167 \ (\%) \tag{2}$$

Here, when the software SW with the same amount of data is transmitted by using the threefold frame, the number of frames needed to transmit the software SW is reduced to 8739 ($\approx$ 26215/3) that is one third of the number of frames that are needed for transmission by using the onefold frame. Further, when the software SW with the same amount of data is transmitted by using the tenfold frame, the number of frames needed to transmit the software SW is reduced to 2622 ($\approx$ 26215/10) that is one tenth of the number of frames that are needed for transmission by using the onefold frame.

Therefore, by the same calculation as the calculation used for the onefold frame, the probability that all of the 400 air conditioners 20 successfully receive all of the 8739 software frames by transmitting the same threefold frame twice (that is, re-transmission is performed once) is calculated as 66.225 (%). Furthermore, by the same calculation as the calculation used for the onefold frame, the probability that all of the 400 air conditioners 20 successfully receive all of the 2622 software frames by transmitting the same tenfold frame twice (that is, re-transmission is performed once) is calculated as 25.288 (%). Meanwhile, the probability that all of the 8739 software frames are successfully received by transmitting the threefold frame three times (that is, re-transmission is performed twice) is 99.286 (%) as a result of the same calculation as the calculation for the onefold frame, which indicates that reception is substantially completely successful.

Based on the probability calculation results as described above, as illustrated in FIG. 5 as described above, it is preferable that the frame length LS of the software frame is longer than the frame length LC of the control command frame CF that is a fixed length, and equal to or shorter than three times the frame length LC. Furthermore, based on the probability calculation results as described above, to successfully receive all of the software frames, as for the number of times of transmission of the same software frame by using multicast, it is sufficient to transmit the same software frame three times at maximum including the first transmission (that is, re-transmission is performed twice at maximum).

Meanwhile, if reception of a control command for performing various kinds of control on the air conditioner 20 is failed repeatedly, operation of the air conditioner 20 may be affected, and therefore, it is desirable that a length of the control command frame CF is a certain length with which it is possible to ensure a high probability of successfully receiving the control command within few times of reception. With respect to the demand as described above, the simulation result as described above indicate that the probability of successfully receiving the control command by transmitting a onefold frame with the same length as the frame length LC of the control command frame CF twice (that is, re-transmission is performed once) is 87.167 (%), and therefore, the simulation result as described above is reasonable.

<Examples of software>

The software SW (hereinafter, may be referred to as "common software") is software that is commonly used by the wall-mounted air conditioner 20-1, the ceiling-embedded air conditioner 20-2, and the duct air conditioner 20-3. With use of the common software, it is possible to transmit the same software SW to all of the air conditioners 20 of various kinds by multicast, so that it is possible to reduce a transmission time of the software SW. Further, the software SW that is the common software is software that causes the wall-mounted air conditioner 20-1, the ceiling-embedded air conditioner 20-2, and the duct air conditioner 20-3 to perform different operation when a parameter for the wall-mounted air conditioner 20-1 (hereinafter, may be referred to as a "first parameter") is set in the wall-mounted air conditioner 20-1, when a parameter for the ceiling-embedded air conditioner 20-2 (hereinafter, may be referred to as a "second parameter") is set in the ceiling-embedded air conditioner 20-2, and when a parameter for the duct air conditioner 20-3 (hereinafter, may be referred to as a "third parameter") is set in the duct air conditioner 20-3. The first parameter is stored in the memory 24 of the wall-mounted air conditioner 20-1, the second parameter is stored in the memory 24 of the ceiling-embedded air conditioner 20-2, and the third parameter is stored in the memory 24 of the duct air conditioner 20-3. The processor 23 of each of the wall-mounted air conditioner 20-1, the ceiling-embedded air conditioner 20-2, and the duct air conditioner 20-3 sets each of parameters stored in the memory 24 of the subject apparatus in the common software and executes the common software, so that each of the wall-mounted air conditioner 20-1, the ceiling-embedded air conditioner 20-2, and the duct air conditioner 20-3 is able to perform operation corresponding to each model.

For example, examples of the common software include the software SW for setting a louver. Further, a rotation amount of the louver is determined by the number of pulses that is output from the processor 23 to a stepping motor that rotates the louver. Therefore, for example, a pulse value of "500" is stored as the first parameter in the memory 24 of the wall-mounted air conditioner 20-1, a pulse value of "600" is stored as the second parameter in the memory 24 of the ceiling-embedded air conditioner 20-2, and a pulse value of "700" is stored as the third parameter in the memory 24 of the duct air conditioner 20-3, so that the processor 23 of the wall-mounted air conditioner 20-1, the processor 23 of the ceiling-embedded air conditioner 20-2, and the processor 23 of the duct air conditioner 20-3 are able to set the louvers at different rotation positions by using the common software for setting the louver.

Thus, embodiments have been described above.

As described above, an air conditioner management system according to the present disclosure (the air conditioner management system 1 according to one embodiment) includes a plurality of air conditioners (the wall-mounted air conditioner 20-1, the ceiling-embedded air conditioner 20-2, and the duct air conditioner 20-3 according to one embodiment), and a management apparatus (the management apparatus 10 according to one embodiment) that is connected to the plurality of air conditioners via a network (the network 30 according to one embodiment). The management apparatus stores software (the software SW according to one embodiment) in a software frame (the software frame SF according to one embodiment) that has a frame length longer than a frame length of a control command frame (the control command frame CF according to one embodiment), which is transmitted from the management apparatus to any of the air conditioners and which has a fixed length, and equal to or shorter than three times the frame length of the control command frame, and transmits the software frame storing the software to the plurality of air conditioners by using multicast. Further, an air conditioner that has completed reception of the software among the plurality of air conditioners operates by using the received software.

Furthermore, a management apparatus according to the present disclosure is a management apparatus that is connected to a plurality of air conditioners via a network and includes a processor (the processor 23 according to one embodiment). The processor stores software in a software frame that has a frame length longer than a frame length of a control command frame, which is transmitted from the management apparatus to any of the air conditioners and which has a fixed length, and equal to or shorter than three times the frame length of the control command frame, and transmits the software frame storing the software to the plurality of air conditioners by using multicast.

In this manner, by collectively transmitting software to the plurality of air conditioners by multicast by using the frame length that is longer than the frame length of the control command frame having a fixed length and equal to or slammer than three times the frame length of the control command frame, it is possible to complete update of software in a short time even in a narrowband network for which a transmission bandwidth is, for example, equal to or larger than 5 kbps and equal to or smaller than 1.25 Mbps.

Moreover, when the plurality of air conditioners includes an air conditioner that has failed to receive the software frame, the processor re-transmits the software frame to the plurality of air conditioners including an air conditioner that has successfully received the software frame by using multicast instead of using unicast.

With this configuration, the software frame is transmitted by always using multicast, so that it is possible to simplify communication procedure as compared to a case in which the software frame is re-transmitted to only an air conditioner that has failed to receive the software frame by using unicast that is handshake communication. With this configuration, it is possible to complete re-transmission of the software frame in a short time even via a network for which the transmission bandwidth is narrow. For example, the processor is able to complete software update by transmitting the same software frame three times at maximum by using multicast.

Furthermore, the plurality of air conditioners includes a first air conditioner (the wall-mounted air conditioner 20-1 according to one embodiment) and a second air conditioner (the ceiling-embedded air conditioner 20-2 according to one embodiment) each including an indoor unit that is installed in a different mode. The software is software that is commonly used by the first air conditioner and the second air conditioner, and that allows the first air conditioner and the second air conditioner to perform different operation when a first parameter for the first air conditioner is set in the first air conditioner and when a second parameter for the second air conditioner is set in the second air conditioner.

In this manner, with use of the software that is commonly used by the first air conditioner and the second air conditioner, even when the software is transmitted by using multicast, it is not needed to transmit different software a plurality of number of times for each model of the air conditioner by using multicast, so that it is possible to complete software update in a short time even in a narrowband network.

Explanation of Reference

| | |
|---|---|
| 1 | air conditioner management system |
| 10 | management apparatus |
| 11 | storage unit |
| 12 | processor |
| 13 | communication unit |
| 20-1 | wall-mounted air conditioner |
| 20-2 | ceiling-embedded air conditioner |
| 20-3 | duct air conditioner |
| 20A | indoor unit |
| 23 | processor |
| 24 | memory |
| 25 | communication unit |

**Claims**

**1.** An air conditioner management system comprising:

a plurality of air conditioners; and
a management apparatus that is connected to the plurality of air conditioners via a network, wherein
the management apparatus transmits a software frame that has a frame length longer than a frame length of a control command frame, the control command frame being transmitted from the management apparatus to any of the air conditioners and having a fixed length, and equal to or shorter than three times the frame length of the control command frame to the plurality of air conditioners by using multicast, and

an air conditioner that has completed reception of the software among the plurality of air conditioners operates by using the received software.

2. A management apparatus that is connected to a plurality of air conditioners via a network, the management apparatus comprising:

a processor that transmits a software frame that has a frame length longer than a frame length of a control command frame, the control command frame being transmitted from the management apparatus to any of the air conditioners and having a fixed length, and equal to or shorter than three times the frame length of the control command frame to the plurality of air conditioners by using multicast.

3. The management apparatus according to claim 2, wherein a transmission bandwidth of the network is equal to or larger than 5 kbps and equal to or smaller than 1.25 Mbps.

4. The management apparatus according to claim 2, wherein when the plurality of air conditioners includes an air conditioner that has failed to receive the software frame, the processor re-transmits the software frame to the plurality of air conditioners including an air conditioner that has successfully received the software frame by using multicast instead of using unicast.

5. The management apparatus according to claim 4, wherein the processor transmits the same software frame three times at maximum by using multicast.

6. The management apparatus according to claim 2, wherein

the plurality of air conditioners includes a first air conditioner and a second air conditioner each including an indoor unit that is installed in a different mode, and

the software is software that is commonly used by the first air conditioner and the second air conditioner, and that allows the first air conditioner and the second air conditioner to perform different operation when a first parameter for the first air conditioner is set in the first air conditioner and when a second parameter for the second air conditioner is set in the second air conditioner.

FIG.1

1

MANAGEMENT APPARATUS `10`

30

WALL-MOUNTER AIR CONDITIONER `20-1`

CEILING-EMBEDDED AIR CONDITIONER `20-2`

DUCT AIR CONDITIONER `20-3`

FIG.2

MANAGEMENT APPARATUS `10`

STORAGE UNIT `11`

PROCESSOR `12`

COMMUNICA-TION UNIT `13`

30

# FIG.3

AIR CONDITIONER ~20

INDOOR UNIT ~20A

MAIN BODY ~21

OPERATING UNIT ~22

PROCESSOR ~23

MEMORY ~24

COMMUNICA-TION UNIT ~25

OUTDOOR UNIT ~20B

30

# FIG.4

EP 4 787 816 A1

# FIG.5

CF

| HEAD-ER PART | DATA PART |
|---|---|

LC

LC<LS≤LC×3

| HEADER PART | DATA PART |
|---|---|

SF

# FIG.6

EP 4 787 816 A1

## INTERNATIONAL SEARCH REPORT

| International application No. |
|---|
| **PCT/JP2024/034166** |

**A.    CLASSIFICATION OF SUBJECT MATTER**

*H04L 67/10*(2022.01)i; *F24F 11/54*(2018.01)i; *H04L 12/28*(2006.01)i; *H04L 67/50*(2022.01)i
FI:    H04L67/10; H04L12/28 200Z; H04L67/50; F24F11/54

According to International Patent Classification (IPC) or to both national classification and IPC

**B.    FIELDS SEARCHED**

Minimum documentation searched (classification system followed by classification symbols)

H04L67/10; F24F11/54; H04L12/28; H04L67/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2019-211882 A (MITSUBISHI ELECTRIC CORPORATION) 12 December 2019 (2019-12-12)<br>    paragraphs [0009]-[0013], [0070]-[0077] | 1-6 |
| A | JP 2017-73089 A (FUJITSU LIMITED) 13 April 2017 (2017-04-13)<br>    paragraphs [0018]-[0020], [0090] | 1-6 |

☐ Further documents are listed in the continuation of Box C.      ☑ See patent family annex.

| | |
|---|---|
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **25 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/034166**

| Patent document cited in search report | | | Publication date (day/month/year) | Patent family member(s) | Publication date (day/month/year) |
|---|---|---|---|---|---|
| JP | 2019-211882 | A | 12 December 2019 | (Family: none) | |
| JP | 2017-73089 | A | 13 April 2017 | (Family: none) | |

Form PCT/ISA/210 (patent family annex) (July 2022)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004126960 A
- JP 2005321515 A